(19) Europäisches Patentamt

European Patent Office

Office européen des brevets

(11) EP 0 618 553 B1

(12) FASCICULE DE BREVET EUROPEEN

(45) Date de publication et mention
de la délivrance du brevet:
**11.03.1998 Bulletin 1998/11**

(51) Int Cl.⁶: **G07F 7/10**

(21) Numéro de dépôt: **94400670.9**

(22) Date de dépôt: **29.03.1994**

(54) **Procédé de cryptage d'informations dans une carte à microprocesseur, procédés de génération de clés, de calcul de certificats et d'authentification le mettant en jeu, et carte à microprocesseur mettant en oeuvre ces procédés**

Verfahren zur Datenchiffrierung einer Chipkarte, zur Schlüsselerzeugung und zum Rechnen seiner Authentifizierungszeugnisse, und diese Verfahren benützende Chipkarten

Data cryptographic process in an IC card, keys generation, certificates calculation and its linked authentification process and IC cards using these processes

(84) Etats contractants désignés:
**DE ES GB IT**

(30) Priorité: **30.03.1993 FR 9303671**

(43) Date de publication de la demande:
**05.10.1994 Bulletin 1994/40**

(73) Titulaire: **GROUPEMENT DES CARTES BANCAIRES "CB" 75008 Paris (FR)**

(72) Inventeurs:
• **Woillez, Christine F-75002 Paris (FR)**
• **Brachet, Claude F-75012 Paris (FR)**

(74) Mandataire: **Martin, Jean-Jacques et al Cabinet REGIMBEAU 26, Avenue Kléber 75116 Paris (FR)**

(56) Documents cités:
**EP-A- 0 414 314          WO-A-88/00742**

## Description

La présente invention a trait d'une façon générale aux cartes à microprocesseur et au cryptage effectué par de telles cartes.

Il est bien connu d'incorporer dans la mémoire morte d'une carte à microprocesseur, notamment carte bancaire ou autre, un algorithme de cryptage permettant, à partir de deux données dont l'une constitue une clé de cryptage et l'autre un diversifiant, un aléa, etc..., d'engendrer un résultat de cryptage et de l'utiliser pour remplir un certain nombre de fonctions, (WO-A-88/00742; EP-A-0414314).

Ces fonctions incluent notamment la génération de clés diversifiées pour un lot de cartes filles à partir d'une carte racine, le calcul d'un certificat ou encore l'authentification "en ligne" d'une carte fille d'un lot donné par la carte racine correspondante.

Cet algorithme, s'il donne relative satisfaction, ne met cependant pas les cartes qui l'incorporent totalement à l'abri des fraudes. En outre, il ne permet de remplir qu'un nombre limité de fonctions.

La présente invention a deux objectifs principaux. Le premier est d'améliorer la sécurité d'un tel cryptage et des fonctions qui y ont recours, en rendant beaucoup plus difficile pour le fraudeur la reconstitution de la fonction de cryptage à partir de l'extérieur, ainsi que d'améliorer la sécurité de la transmission d'informations telles que des clés diversifiées entre par exemple une carte racine et chacune des cartes filles d'un lot. Le deuxième est d'élargir les possibilités de cryptage et donc d'élargir la nature et la quantité de fonctions inhérentes aux cartes bancaires et faisant appel à un tel cryptage.

L'invention concerne à cet effet, selon un premier aspect, un procédé de génération d'une information cryptée dans une carte à microprocesseur, ladite carte contenant dans une mémoire de données non volatile un jeu de clés de cryptage sélectionnables, caractérisé en ce qu'on applique la formule de cryptage suivante :

$$(K1,K2,A,M) \rightarrow F(K1,K2,A,M) = R = E((E(M,K1) \oplus (A)),K2)$$

où :

$E(x,y)$ désigne un algorithme cryptographique mémorisé dans une mémoire non volatile de la carte à microprocesseur, appliqué à des données x et y appartenant au domaine spécifique dudit algorithme, désigné par $\{0,1\}^a$,

M désigne une information d'entrée à crypter, appartenant au domaine $\{0,1\}^a$, appliquée à la carte à microprocesseur,

K1 et K2 désignent deux clés de cryptage, respectivement primaire et secondaire, différentes ou identiques, sélectionnées parmi ledit jeu de clés dans ladite mémoire de données non-volatile par l'application à la carte d'informations externes de sélection de clés, lesdites clés sélectionnées appartenant au domaine $\{0,1\}^a$,

A désigne une information représentative de la nature ou de l'origine du cryptage à effectuer, appliquée directement à la carte à microprocesseur ou localisée dans ladite carte par une adresse en entrée,

f(A) désigne une fonction de transformation de l'information A telle que f(A) appartienne à $\{0,1\}^a$, et

& désigne une fonction booléenne prédéterminée.

De préférence, cette fonction & est la fonction "Ou Exclusif", notée $\oplus$.

De façon avantageuse, l'information M à crypter est constituée par la concaténation d'une donnée et de ladite adresse AC, et la fonction f(A) désigne l'information A contenue à l'adresse AC complétée éventuellement par au moins un bit prédéterminé pour concorder avec le domaine $\{0,1\}^a$.

Selon un deuxième aspect, l'invention propose un procédé de génération en clair d'une pluralité de clés diversifiées à partir d'une information secrète invariable et d'une pluralité de diversifiants permettant chacun d'engendrer une clé diversifiée respective, caractérisé en ce que l'on exécute de façon répétée le procédé tel que défini ci-dessus, où les clés sélectionnées K1 et K2 constituent ladite information secrète et l'information d'entrée M constitue ledit diversifiant.

Optionnellement, l'information A intervient dans le cryptage comme information caractéristique de l'émetteur desdites clés diversifiées.

Le procédé ci-dessus peut être mis en oeuvre pour engendrer une pluralité de clés filles pour une pluralité de cartes à microprocesseur filles à partir d'une clé racine contenue dans la carte à microprocesseur, constituant une carte racine. Il est dans ce cas caractérisé en ce que M est constitué par une information figée contenue dans chaque carte fille et propre à celle-ci, qui est appliquée à ladite carte racine, et en ce qu'à la suite de chaque étape de cryptage, on écrit le résultat R du cryptage dans chaque carte fille.

Dans le procédé ci-dessus, M est avantageusement constitué par un numéro d'identification normalisé de la carte fille respective.

Ce même procédé peut également être mis en oeuvre pour engendrer une pluralité de clés diversifiées dans chaque carte fille, à usage interbancaire. Dans ce cas, il est caractérisé en ce que la carte racine contient parmi son jeu de clés de cryptage au moins une clé racine obligatoire, ainsi qu'au moins trois mots de données situées à des adresses prédéterminées, et en ce que, pour chaque carte fille:

- on exécute dans la carte racine les étapes de cryptage suivantes:

$$CT0 = E((E(NISO+ACR0,CR0)\oplus[ACR0]),CR0)$$

$$CB = E((E(NISO+ACB,CR0)\oplus[ACB]),CR0)$$

$$CO = E((E(NISO+ACO,CR0)\oplus[ACO]),CR0)$$

où:

CR0 désigne la clé racine obligatoire de la carte racine,
le signe + désigne la concaténation binaire,
NISO désigne le numéro d'identification normalisé de la carte fille concernée,
[AC...] désigne une donnée obtenue en complétant le contenu de l'adresse AC... avec une pluralité de bits prédéterminés,
CT0 désigne une clé interbancaire obligatoire,
CB désigne une clé de banque obligatoire,
CO désigne une clé d'ouverture obligatoire, et

- on écrit lesdites clés CT0, CB et CO dans ladite carte fille à partir de ladite carte racine.

Préférentiellement, la carte racine contient également dans son jeu de clés au moins une clé facultative et au moins un mot de donnée associé situé à une adresse prédéterminée dans la mémoire de ladite carte racine.
Dans cette hypothèse, pour engendrer dans chaque carte fille au moins une clé facultative :

- on applique dans la carte racine la formule de cryptage :

$$CTx = E((E(NISO+ACRx,CRx)\oplus[ACRx]),CRx)$$

où

CRx désigne une clé racine facultative,
le signe + désigne la concaténation binaire,
NISO désigne le numéro d'identification normalisé de la carte fille concernée,
[ACRx] désigne une donnée obtenue en complétant le contenu de l'adresse ACRx avec une pluralité de bits prédéterminés, et

- on écrit lesdites clés CTx dans ladite carte fille à partir de ladite carte racine.

L'invention concerne selon un autre aspect un procédé de calcul d'un certificat dans une carte à microprocesseur, caractérisé en ce qu'on met en oeuvre le procédé de cryptage défini plus haut, où K1 et K2 constituent des clés permettant de caractériser la carte à microprocesseur, A est lue dans la mémoire de la carte à microprocesseur à partir d'une adresse prédéterminée appliquée à ladite carte, et M constitue un aléa, le résultat R du cryptage constituant ledit certificat.
Le procédé ci-dessus, appliqué à une carte bancaire à microprocesseur pour établir un certificat associé à une transaction, est caractérisé en ce que A constitue une donnée de transaction mémorisée dans ladite carte bancaire, et M est une information choisie dans le groupe comprenant la date, l'heure, et les informations d'identification du commerçant et/ou de son terminal de paiement.
L'invention propose selon un autre aspect encore un procédé d'authentification d'une carte à microprocesseur par une entité émettrice de ladite carte, caractérisé en ce qu'on met en oeuvre le procédé de calcul d'un certificat tel que défini plus haut dans ladite carte, avec un aléa M provenant de ladite unité émettrice et connu de celle-ci et en ce que, dans l'entité émettrice, on compare ledit certificat avec une valeur attendue.

Ce procédé d'authentification peut être appliqué à une carte bancaire, auquel cas il est préférentiellement caractérisé en ce que l'information A est constituée par une donnée mémorisée dans ladite carte à une adresse prédéterminée et identifiant son émetteur.

Dans le procédé de cryptage défini plus haut, l'algorithme $E(x,y)$ peut être réversible, auquel cas on démontre que, si la fonction booléenne & est elle aussi réversible (c'est notamment le cas de la fonction "Ou Exclusif"), la fonction de cryptage F exposée plus haut possède une réciproque G.

L'invention propose selon un autre aspect encore un procédé de génération sous forme cryptée d'une pluralité de clés filles diversifiées pour une pluralité de cartes à microprocesseur filles à partir d'une clé racine contenue dans une carte à microprocesseur racine, caractérisé par la mise en oeuvre des étapes suivantes pour chaque carte fille :

- on exécute dans la carte racine le procédé de cryptage défini plus haut, avec un algorithme E réversible, en deux sous étapes successives:

    - mise en oeuvre de la formule

$$Kd = E(N,Kr) \oplus f(Ag)$$

    où

    Kr est la clé racine,
    N est une donnée contenue dans la carte fille et particulière à la carte fille considérée, transmise à la carte racine,
    Ag est une donnée contenue dans la carte racine et propre au type de clé fille à engendrer,
    $E(x,y)$ et $f(...)$ ont la même signification que plus haut, Kd est la clé fille,

    - mise en oeuvre de la formule

$$CKd = E(Kd,Kc)$$

    où

    Kc est une clé de transport commune, contenue dans la carte racine et dans chacune des cartes filles de ladite carte racine,
    CKd est un cryptage de ladite clé fille,

- on transmet à la carte fille à partir de la carte racine ledit cryptage CKd de la clé fille,
- on met en oeuvre dans la carte fille la formule de décryptage suivante :

$$Kd = D(CKd, Kc)$$

où $D(x,y)$ est l'algorithme réciproque de $E(x,y)$, opérant dans le même domaine, pour ainsi reconstituer dans ladite carte fille la clé Kd, et
- on écrit la clé fille Kd dans la carte fille.

La réversibilité de l'algorithme E permet également de proposer un procédé d'authentification, par une carte fille, de la présentation d'une clé diversifiée par une carte racine à ladite carte fille, caractérisé par les étapes suivantes :

- on met en oeuvre dans la carte racine la formule suivante :

$$Kd = E(N,Kr) \oplus f(Ag)$$

où

Kr est une clé racine,

N est une donnée contenue dans la carte fille et particulière à la carte fille considérée, transmise à la carte racine,

Ag est une donnée contenue dans la carte racine et propre au type de clé fille à engendrer,

E(x,y) et f(...) ont la même signification que plus haut,

Kd est la clé fille,

- on met en oeuvre dans la carte racine le procédé de cryptage selon l'invention, à algorithme E réversible, sous la forme suivante :

$$MS = E((E(Rand,Kd) \oplus f(Av)),Kc)$$

où

Kc est une clé de transport commune, contenue dans la carte racine et dans chacune des cartes filles de ladite carte racine,

Av est une donnée propre à la carte fille considérée, contenue dans celle-ci et transmise à la carte racine,

Rand est un aléa fourni à la carte racine par la carte fille considérée,

MS est un message cryptant ladite clé fille Kd,

- on transmet à la carte fille à partir de la carte racine ledit message MS,
- on met en oeuvre dans la carte fille la formule de décryptage suivante:

$$Rand' = D((D(MS,Kc) \oplus f(Av))Kd)$$

où

D(x,y) est l'algorithme réciproque de E(x,y), opérant dans le même domaine, et

- on vérifie dans la carte fille l'identité de la donnée Rand engendrée et de la donnée Rand' calculée.

Enfin la présente invention propose dans le même esprit un procédé d'authentification sécurisée d'une carte fille par une carte-racine, caractérisé par les étapes suivantes :

- on met en oeuvre dans la carte racine la formule suivante :

$$Kdr = E(N,Kr) \oplus f(Ag)$$

où

Kr est une clé racine,

N est une donnée contenue dans la carte fille et particulière à la carte fille considérée,

Ag est une donnée contenue dans la carte racine et propre au type de clé fille à engendrer,

E(x,y) et f(...) ont la même signification que plus haut,

Kdr est une reconstitution de la clé fille attendue,

- on met en oeuvre dans la carte fille le procédé de cryptage de l'invention, avec algorithme E réversible, sous la forme suivante :

$$MS = D((D(Rand,Kdf) \oplus f(Av)),Kc)$$

où

D(x,y) est l'algorithme réciproque de E(x,y), opérant dans le même domaine,

Kc est une clé de transport commune, contenue dans la carte racine et dans chacune des cartes filles de ladite carte racine,

Av est une donnée propre à la carte fille considérée, contenue dans celle-ci et transmise à la carte racine,
Rand est un aléa fourni par la carte racine à la carte fille considérée,
Kdf est une clé fille lue dans la carte fille,
MS est un message crypté,

- on transmet à la carte racine à partir de la carte fille ledit message MS,
- on met en oeuvre dans la carte racine la formule de décryptage suivante:

$$\text{Rand'} = E((E(MS,Kc) \oplus f(Av))Kdr)$$

et

- on vérifie dans la carte racine l'identité de la donnée Rand-engendrée et de la donnée Rand' calculée, et donc l'identité de la clé fille Kdf et de la clé fille attendue Kdr.

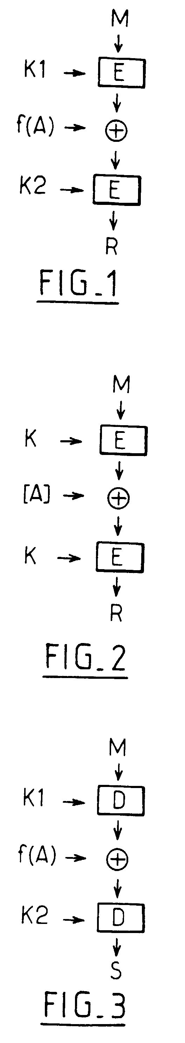

On va maintenant décrire en détail un certain nombre de procédés selon la présente invention, en référence au dessin où les figures 1 à 3 illustrent sous forme graphique trois fonctions de cryptage selon la présente invention.

Un procédé de cryptage à la base de la présente invention repose sur la capacité d'une carte à microprocesseur à :

- stocker en permanence, et sans possibilité d'altération, dans une mémoire de données de type mémoire à lecture seule électriquement programmable (EPROM) ou de type mémoire à lecture seule électriquement programmable et effaçable (EEPROM), un jeu de clés cryptographiques, accessible seulement par le microprocesseur de la carte mais secret vis-à-vis de l'extérieur; ces clés sont notées CS0, CS1, ..., CSn, où $\underline{n}$ désigne un entier positif non nul. Ces clés se présentent sous la forme d'une succession de $\underline{a}$ éléments binaires ou bits, et l'on indiquera dans la suite qu'elles appartiennent au domaine $\{0,1\}^a$; $\underline{a}$ est un entier positif non nul par exemple égal à 64;
- mettre en oeuvre, dans sa mémoire à lecture seule RON1, programmable, un algorithme cryptographique E dans le domaine $\{0,1\}^a$, c'est-à-dire acceptant en entrée des informations sous forme de mots de $\underline{a}$ bits; cet algorithme est exprimé sous la forme :

$$(M,K) \rightarrow E(M,K) \tag{1}$$

où

M représente un message d'entrée à crypter, appartenant au domaine $\{0,1\}^a$,
K représente une clé cryptographique choisie dans le jeu précité, et
E(M,K) représente le cryptogramme obtenu.

Selon la présente invention, on met en oeuvre dans la carte à microprocesseur une fonction cryptographique F, programmable dans sa mémoire morte ROM, qui fait intervenir les éléments, données et paramètres suivants :

- l'algorithme cryptographique E;
- un message d'entrée M appartenant au domaine $\{0,1\}^a$;
- une donnée d'entrée notée A, dont la nature et la structure dépendent de la fonctionnalité mise en oeuvre par la fonction cryptographique, comme on le verra en détail plus loin; A peut constituer notamment un aléa, une adresse particulière de la mémoire de données de la carte, la valeur d'un compteur, une valeur prédéterminée provenant de l'extérieur, etc...; la donnée A appartient ou non au domaine $\{0,1\}^a$;
- une fonction notée $\underline{f}$ de transformation de la donnée A telle que :

$$A \rightarrow f(A) \text{ appartenant au domaine } \{0,1\}^a;$$

- deux clés choisies dans le jeu secret de clés précité, à savoir une clé primaire notée K1 et une clé secondaire notée K2; on notera ici que K1 et K2 peuvent dans certains cas être identiques; cette sélection s'effectue en appliquant à la carte des données externes de sélection telles que les adresses des clés à utiliser; et
- une fonction algébrique booléenne &, en particulier la fonction "Ou Exclusif", notée $\oplus$.

Selon la présente invention, la fonction F est définie comme suit :

$$(K1,K2,A,M) \rightarrow F(K1,K2,A,M) = R = E((E(M,K1)\&f(A)),K2) \qquad (2)$$

K1, K2, f(A) et M appartenant au domaine $\{0,1\}^a$.

Dans toute la description qui suit, la fonction booléenne susmentionnée sera la fonction "Ou Exclusif" $\oplus$.

Cette fonction cryptographique F est illustrée graphiquement sur la figure 1. On comprend que la fonction F fait appel à une double mise en oeuvre de l'algorithme cryptographique E, en cascade.

La fonction cryptographique F est mise en oeuvre dans la carte à microprocesseur par une commande ou instruction spécifique, appliquée à la carte depuis l'extérieur suivant un protocole particulier choisi, cette commande incorporant ou étant accompagnée du message M et d'informations permettant d'identifier les clés K1 et K2 à utiliser et la donnée A (ou la donnée A elle-même).

La possibilité selon la présente invention de sélectionner dans chaque commande de la fonction cryptographique F une ou deux clés parmi un jeu secret de clés programmé dans la carte pour mettre en oeuvre ladite fonction F va permettre de répondre aux besoins d'une application de :

- réunir au sein d'une même carte à microprocesseur des clés distinctes pour des fonctions cryptographiques distinctes; et
- réunir au sein d'une même carte à microprocesseur des clés distinctes destinées à une même fonction cryptographique.

On va maintenant décrire une première application concrète de la présente invention, à savoir la génération par une carte à microprocesseur d'une pluralité de clés diversifiées, présentées en clair.

Cette fonctionnalité répond au besoin, connu en lui-même, d'une application de générer une série de clés particulières à partir d'une valeur secrète (par exemple une ou plusieurs clés de base), grâce à l'emploi de données variables ou diversifiants, qui peuvent ne pas être secrètes.

Cette fonctionnalité est mise en oeuvre avec la fonction cryptographique F selon la présente invention, où K1 et K2 constituent la valeur secrète et M constitue le diversifiant. Dans ce cas, la donnée d'entrée A reste à la disposition de l'application et permet, par exemple, de caractériser l'émetteur de la clé engendrée ou la clé elle-même.

Une deuxième application concrète de la présente invention est constituée par le calcul de certificat et l'authentification.

On rappellera ici que le calcul de certificat répond au besoin d'une application de prouver qu'une donnée particulière est bien présente dans la mémoire de données d'une carte particulière.

Le procédé de cryptage selon l'invention permet la mise en oeuvre de cette fonctionnalité, en utilisant K1 et K2 comme clés destinées à caractériser la carte utilisée, A comme l'adresse de la donnée de la mémoire participant à la fonction F, et M comme aléa permettant de rendre ce calcul unique.

Dans le cas particulier où l'adresse A et son contenu sont fixés et connus, la mise en oeuvre de la fonction F dans une carte à microprocesseur permet de réaliser l'authentification de cette carte par son émetteur, en déterminant si le résultat R de la fonction F est bien le résultat attendu.

La présente invention trouve également application dans la génération de cartes dites "filles" à partir d'une carte dite "racine". On rappellera ici qu'une carte racine a pour vocation de générer les clés de cryptage d'un lots de cartes filles donné, par diversification d'une clé contenue dans la carte racine et appelée clé racine. Les clés diversifiées engendrées sont appelées clés filles.

On observera ici que, lors de la fabrication de chaque carte fille, une valeur distincte est inscrite de façon inaltérable dans sa mémoire de données et est destinée à l'identifier. En pratique, il peut s'agir d'un numéro de série ou d'un numéro normalisé dit numéro ISO, à m chiffres décimaux codés sous forme binaire.

Très avantageusement, on utilise cette valeur d'identification comme diversifiant, constituant le message M appliqué à la fonction F, pour chaque carte fille particulière.

Ainsi, une commande appliquée à la carte racine, avec des valeurs déterminées des clés K1 et K2 et de la donnée A, contenues dans la carte racine, et avec un diversifiant M propre à chaque carte fille et provenant de celle-ci dans le cas précité, permet à la carte racine de délivrer un résultat R qui peut être utilisé :

- soit comme clé fille à inscrire dans la carte fille considérée lors de la personnalisation de cette dernière, dont le microprocesseur écrit cette clé fille à une adresse déterminée de sa mémoire de données;
- soit comme clé fille à appliquer ponctuellement à la carte fille à des fins d'authentification, conformément à des critères d'accessibilité imposés par ladite carte fille lors de son utilisation: dans ce cas, la carte fille compare la clé fille appliquée avec une clé correspondante inscrite dans sa mémoire de données, pour établir ou non une authenticité.

On va maintenant décrire en détail une application concrète préférée des fonctionnalités décrites ci-dessus au cas d'une carte bancaire à microprocesseur.

Dans cette application :

- l'algorithme cryptographique E utilisé dans la fonction F est par exemple constitué par l'algorithme dit DES (Data Encryption Standard), connu en soi, qui reçoit en entrée des données binaires de 64 bits ($\underline{a} = 64$);
- M consiste en la concaténation d'une donnée externe de $\underline{b}$ bits, avec $\underline{b} < \underline{a}$ et par exemple égal à 48, avec une adresse A de la mémoire de données de la carte, dans ce cas sur 16 bits;
- la fonction f(A), notée [A], est la concaténation d'un mot de $\underline{c}$ bits tous à zéro et de la donnée présente à l'adresse A de la mémoire; par exemple, cette donnée comporte 32 bits, auquel cas $\underline{c} = 32$;
- enfin les clés K1 et K2 sont constituées par une même clé notée K.

La fonction cryptographique F indiquée plus haut devient donc dans ce cas :

$$R = F(K,K,A,M) = E((E(M,K)\oplus[A]),K) \tag{3}$$

Elle est représentée sous forme graphique sur la figure 2.

La carte bancaire est conçue de préférence pour contenir un jeu de cinq clés de 64 bits, notée CT0 à CT4, ainsi que, de façon connue en soi, une clé dite de banque CB et une clé dite d'ouverture CO. Dans l'exemple décrit, ces deux dernières clés ne sont toutefois pas utilisées dans la fonction cryptographique F.

Avantageusement, la commande appliquée à la carte pour l'exécution de la fonction F comprend un paramètre compris par exemple entre 0 et 4 pour choisir respectivement l'une des cinq clés CT0 à CT4.

Dans l'application bancaire, la génération de clés diversifiées pour cartes filles telle que décrite plus haut dans son aspect général peut être utilisée à l'aide d'une carte racine qui contient :

- un jeu secret de clés comprenant :

  - obligatoirement au moins une clé CR0;
  - facultativement une ou plusieurs clés additionnelles notées CRx, par exemple quatre clés CR1, CR2, CR3 et CR4 (soit x = 1, 2, 3 ou 4);

- un ensemble de mots de données comprenant :

  - obligatoirement au moins trois mots de données situées à des adresses fixées notées ACR0, ACB et ACO;
  - facultativement d'autres mots de données, en nombre égal à celui des clés facultatives CRx et situés à des adresses notées ACRx; en l'espèce, quatre mots de données situés aux adresses notées ACR1, ACR2, ACR3 et ACR4.

Lors de la personnalisation d'une carte bancaire fille, un identifiant normalisé unique est inscrit dans la carte (numéro ISO noté dans la suite NISO).

La personnalisation d'une carte fille se poursuit par la génération par la carte racine des clés filles suivantes :

- la clé interbancaire obligatoire CT0 exprimée par

$$CT0 = E((E(NISO+ACR0,CR0)\oplus[ACR0]),CR0) \tag{4}$$

- la clé de banque obligatoire CB exprimée par

$$CB = E((E(NISO+ACB,CR0)\oplus[ACB]),CR0) \tag{5}$$

- la clé d'ouverture obligatoire C0 exprimée par

$$CO = E((E(NISO+ACO,CR0)\oplus[ACO]),CR0) \tag{6}$$

- les clés facultatives CTx exprimées par

$$CTx = E((E(NISO+ACRx,CRx)\oplus[ACRx]),CRx) \tag{7}$$

(avec x = 1, 2, 3 ou 4).

Ces clés sont transmises à la carte fille et inscrites dans celle-ci.

On observe que les formules (4) à (6) font intervenir comme clé unique la clé racine obligatoire CR0, comme élément actif du diversifiant la donnée NISO, et comme donnée d'entrée représentative du type de clé engendré les données contenues aux adresses ACR0, ACB, ACO et ACRx, respectivement.

La fonction de calcul de certificat décrite plus haut dans sa généralité est utilisée lors de chaque transaction effectuée avec une carte bancaire.

Dans ce cas, la fonction cryptographique F de la présente invention est préférentiellement mise en oeuvre en choisissant pour A l'adresse du mot de la mémoire de la carte où la transaction est enregistrée, en incorporant dans M une donnée extérieure (notée M') construite par exemple à partir de la date ou de l'heure de la transaction, de l'identificateur du commerçant ou encore de l'identificateur du terminal de paiement électronique du commerçant. La clé de cryptage utilisée est la clé interbancaire CT0. Le certificat CERT s'exprime donc sous la forme :

$$CERT = E((E(M'+A,CT0)\oplus[A]),CT0) \tag{8}$$

Pour l'authentification en ligne d'une carte bancaire lors d'une transaction incorporant cette fonction, on utilise la fonction F d'une manière tout à fait semblable au calcul d'un certificat comme décrit ci-dessus, à ceci près que :

- A est constitué par une adresse d'un mot fixe et prédéterminé de la mémoire de la carte qui contient les données relatives à l'émetteur de la carte, et
- M est un aléa appliqué à la carte par le terminal.

On va maintenant décrire d'autres aspects préférés de la présente invention, que l'on peut mettre en oeuvre dans le cas où l'on choisit pour l'algorithme cryptographique de base E un algorithme réversible.

La réversibilité de E signifie concrètement qu'il existe un algorithme D, dans le même domaine $\{0,1\}^a$ que E, qui vérifie l'égalité suivante :

$$D(E(M,K),K) = M \tag{9}$$

On peut donc créer et programmer dans la mémoire à lecture seule d'une carte à microprocesseur une fonction cryptographique G définie ainsi :

$$(K1,K2,A,M) \rightarrow S = G(K1,K2,A,M) = D((D(M,K1)\oplus f(A)),K2) \tag{10}$$

avec K1, K2,f(A),M,S inclus dans le domaine $\{0,1\}^a$.

Cette fonction est exprimée graphiquement sur la figure 3.

Il est important d'observer ici que les fonctions F et G satisfont à la relation suivante :

$$R = F(K1,K2,A,M) \Leftrightarrow G(K2,K1,A,R) = M \tag{11}$$

Cette propriété des fonctions F et G va permettre, comme on va le voir ci-dessous, la mise en oeuvre de certaines des fonctionnalités ci-dessus de façon protégée ou sécurisée.

Cette mise en oeuvre sécurisée s'effectue selon l'invention en exécutant la fonction cryptographique F dans des cartes racines et sa fonction réciproque G dans des cartes filles (ou inversement), en prenant la précaution de définir une clé de cryptage commune à l'ensemble des cartes filles d'un même lot et a la carte racine dont elles sont issues.

Ainsi, la génération de clés diversifiées pour un lot de cartes filles et leur transfert vers ces dernières peut s'effectuer de façon protégée, par les étapes successives suivantes :

- pour chaque carte fille d'un lot, génération dans la carte racine d'une clé diversifiée spécifique à partir d'une clé racine correspondant au lot considéré,
- transmission de la clé générée à la carte fille de manière sécurisée,
- inscription de ladite clé par le microprocesseur de la carte fille dans sa mémoire de données.

Pour ce faire, on commence par mettre en oeuvre dans la carte racine la première étape de la fonction de cryptage F, comme suit :

$$Kd = E(N,Kr) \oplus f(Ag) \tag{12}$$

où

Kr est la clé racine,
Ag une donnée de la carte racine relative au type de clé générée,
N une valeur particulière (par exemple numéro ISO) propre à la carte fille considérée,
Kd est la clé fille diversifiée.

On met ensuite en oeuvre, toujours dans la carte racine, la deuxième et dernière étape de la fonction F, comme suit :

$$CKd = E(Kd,Kc) \tag{13}$$

où

Kc est une clé de transport commune à la carte racine et aux cartes filles du lot considéré, préalablement inscrit dans ces cartes,
et CKd est un cryptage de la clé Kd.

On a donc

$$CKd = F(Kr, Kc, Ag, N) \tag{14}$$

La troisième étape du procédé s'effectue dans la carte fille afin de décrypter le cryptage CKd qui lui a été transmis par la carte racine pour reconstituer la clé Kd et l'inscrire dans cette carte.
La carte fille exécute à cet effet le calcul suivant :

$$Kd = D(CKd, Kc) \tag{15}$$

On observe donc que la fonction cryptographique à deux étapes de la présente invention permet d'une part d'engendrer une clé fille diversifiée, et d'autre part de transmettre cette clé sous forme cryptée à la carte fille, qui effectue grâce à la réversibilité de l'algorithme E le décryptage permettant de reconstituer la clé.
On comprend que la sécurité de l'opération de création d'un lot de cartes filles est grandement améliorée.
L'utilisation d'une fonction F dotée d'une réciproque G permet également d'effectuer une présentation protégée de clés à des fins d'authentification.
Classiquement, l'authentification d'une carte racine par une carte fille est effectuée :

(a) en générant, dans une carte racine, la clé spécifique contenue dans une carte fille donnée;
(b) en transmettant de la carte fille vers la carte racine un aléa,
(c) en effectuant dans la carte racine un calcul faisant intervenir ledit aléa et ladite clé spécifique,
(d) en transmettant le résultat du calcul à la carte fille, et
(e) en vérifiant dans la carte fille si ce résultat est conforme à un résultat attendu.

L'étape (a) est ici réalisée par la première étape de la fonction cryptographique F, comme suit:

$$Kdr = E(N,Kr) \oplus f(Ag) \qquad (16)$$

où

Kr est la clé racine,
Ag une donnée de la carte racine relative au type de clé générée,
N une valeur particulière (par exemple numéro ISO) propre à la carte fille considérée,
Kdr est la clé fille calculée.

L'étape (c) est quant à elle constituée par une mise en oeuvre de la fonction F complète dans la carte racine, selon la formule :

$$MS = F(Kdr,Kc,Av,Rand) \qquad (17)$$

où

Kc est la clé de transport commune à l'ensemble des cartes filles et à la carte racine,
Av est une donnée propre à la carte fille considérée (par exemple son numéro ISO, un mot de la transaction en cours, etc...),
Rand est l'aléa transmis à la carte par la carte fille, et
MS est le message résultat du calcul, transmis à la carte fille à l'étape (d).

Enfin pour effectuer l'étape (e), le microprocesseur de la carte fille met en oeuvre la fonction réciproque G sur le message MS reçu, comme suit:

$$Rand' = G(Kc,Kdf,Av,MS) \qquad (18)$$

où

Kdf est la clé fille lue dans la carte fille,
et vérifie si le nombre Rand' calculé correspond bien à l'aléa Rand envoyé à l'étape (b), pour vérifier si les clés Kdr et Kdf sont identiques.

Enfin la fonctionnalité ci-dessus peut être modifiée pour réaliser une authentification.
Dans ce cas, la première étape est réalisée dans la carte racine, conformément à l'équation (16) ci-dessus.
En revanche, l'étape correspondant à l'équation (17) est réalisée dans la carte fille, après que la carte racine lui ait transmis un aléa Rand.
Enfin la dernière étape (équation (18)) est réalisée dans la carte racine, après que la carte fille lui ait transmis le message MS issu de la mise en oeuvre de l'équation (17).
La carte racine compare alors l'aléa envoyé Rand avec la valeur calculée Rand', pour établir ou non l'authenticité.
Bien entendu, la présente invention n'est nullement limitée aux formes de réalisation décrites et illustrées, mais l'homme de l'art saura y apporter toute variante ou modification dans le cadre des revendications jointes.

## Revendications

1. Procédé de génération d'une information cryptée (R) dans une carte à microprocesseur, ladite carte contenant dans une mémoire de données non volatile un jeu de clés de cryptage sélectionnables (CS0, .... CSn), caractérisé en ce qu'on applique la formule de cryptage F suivante :

$$(K1,K2,A,M) \rightarrow F(K1,K2,A,M) = R = E((E(M,K1)\&f(A)),K2)$$

où:

E(x,y) désigne un algorithme cryptographique mémorisé dans une mémoire non volatile de la carte à microprocesseur, appliqué à des données x et y appartenant au domaine spécifique dudit algorithme, désigné par $\{0,1\}^a$,

M désigne une information d'entrée à crypter, appartenant au domaine $\{0,1\}^a$, appliquée à la carte à microprocesseur,

K1 et K2 désignent deux clés de cryptage, respectivement primaire et secondaire, différentes ou identiques, sélectionnées parmi ledit jeu de clés (CS0, ..., CSn) dans ladite mémoire de données non-volatile par l'application à la carte d'informations externes de sélection de clés, lesdites clés sélectionnées appartenant au domaine $\{0,1\}^a$,

A désigne une information représentative de la nature ou de l'origine du cryptage à effectuer, appliquée directement à la carte à microprocesseur ou localisée dans ladite carte par une adresse en entrée (AC),

f(A) désigne une fonction de transformation de l'information A telle que f(A) appartienne à $\{0,1\}^a$, et

& désigne une fonction booléenne.

2. Procédé selon la revendication 1, caractérisé en ce que ladite fonction booléenne est la fonction "Ou Exclusif" ($\oplus$).

3. Procédé selon la revendication 2, caractérisé en ce que l'information M à crypter est constituée par la concaténation d'une donnée (NISO) et de ladite adresse AC et en ce que la fonction f(A) désigne l'information A contenue à l'adresse AC complétée éventuellement par au moins un bit prédéterminé pour concorder avec le domaine $\{0,1\}^a$.

4. Procédé de génération en clair d'une pluralité de clés diversifiées à partir d'une information secrète invariable et d'une pluralité de diversifiants permettant chacun d'engendrer une clé diversifiée respective, caractérisé en ce que l'on exécute de façon répétée le procédé de la revendication 1, 2 ou 3, où les clés sélectionnées K1 et K2 constituent ladite information secrète et l'information d'entrée M constitue ledit diversifiant.

5. Procédé selon la revendication 4, caractérisé en ce que l'information A intervient en outre dans le cryptage comme information caractéristique d'un émetteur desdites clés diversifiées.

6. Procédé selon la revendication 4 ou 5, pour engendrer une pluralité de clés filles pour une pluralité de cartes à microprocesseur filles à partir d'une clé racine contenue dans la carte à microprocesseur, constituant une carte racine, caractérisé en ce que M est constitué par une information figée contenue dans chaque carte fille et propre à celle-ci, qui est appliquée à ladite carte racine, et en ce qu'à la suite de chaque étape de cryptage, on écrit le résultat R du cryptage dans chaque carte fille.

7. Procédé selon la revendication 6, caractérisé en ce que M est constitué à chaque fois par un numéro d'identification normalisé (NISO) de la carte fille respective.

8. Procédé selon la revendication 7, pour engendrer une pluralité de clés diversifiées dans chaque carte fille, à usage interbancaire, caractérisé en ce que la carte racine contient parmi son jeu de clés de cryptage au moins une clé racine obligatoire (CR0), ainsi qu'au moins trois mots de données situées à des adresses prédéterminées (ACR0, ACB, ACO), et en ce que, pour chaque carte fille:

- on exécute dans la carte racine les étapes de cryptage suivantes:

$$CT0 = E((E(NISO+ACR0,CR0)\oplus[ACR0]),CR0)$$

$$CB = E((E(NISO+ACB,CR0)\oplus[ACB]),CR0)$$

$$CO = E((E(NISO+ACO,CR0)\oplus[ACO]),CR0)$$

où:

CR0 désigne la clé racine obligatoire de la carte racine,
le signe + désigne la concaténation binaire,
NISO désigne le numéro d'identification normalisé de la carte fille concernée,

[AC...] désigne une donnée obtenue en complétant le contenu de l'adresse AC... avec une pluralité de bits prédéterminés,

CT0 désigne une clé interbancaire obligatoire,

CB désigne une clé de banque obligatoire,

CO désigne une clé d'ouverture obligatoire, et

- on écrit lesdites clés CT0, CB et CO dans ladite carte fille à partir de ladite carte racine.

9. Procédé selon la revendication 8, caractérisé en ce que ladite carte racine contient également dans son jeu de clés au moins une clé facultative (CRx) et au moins un mot de donnée associé situé à une adresse prédéterminée (ACRx) dans la mémoire de ladite carte racine, caractérisé en outre en ce que, pour engendrer dans chaque carte fille au moins une clé facultative (CTx) :

- on applique dans la carte racine la formule de cryptage :

$$CTx = E((E(NISO+ACRx,CRx) \oplus [ACRx]),CRx)$$

où

CRx désigne une clé racine facultative,

le signe + désigne la concaténation binaire,

NISO désigne le numéro d'identification normalisé de la carte fille concernée,

[ACRx] désigne une donnée obtenue en complétant le contenu de l'adresse ACRx avec une pluralité de bits prédéterminés, et

- on écrit lesdites clés CTx dans ladite carte fille à partir de ladite carte racine.

10. Procédé de calcul d'un certificat dans une carte à microprocesseur, caractérisé en ce qu'on met en oeuvre le procédé de la revendication 1 ou 2, où

K1 et K2 constituent des clés permettant de caractériser la carte à microprocesseur,

A est lue dans la mémoire de la carte à microprocesseur à partir d'une adresse prédéterminée appliquée à ladite carte, et

M constitue un aléa,

le résultat R du cryptage constituant ledit certificat.

11. Procédé selon la revendication 10, appliqué à une carte bancaire à microprocesseur pour établir un certificat associé à une transaction, caractérisé en ce que A constitue une donnée de transaction mémorisée dans ladite carte bancaire, et M est une information choisie dans le groupe comprenant la date, l'heure, et les informations d'identification du commerçant et/ou de son terminal de paiement.

12. Procédé d'authentification d'une carte à microprocesseur par une entité émettrice de ladite carte, caractérisé en ce qu'on met en oeuvre le procédé de calcul d'un certificat (R) selon la revendication 10 dans ladite carte, avec un aléa M provenant de ladite entité émettrice et connu de celle-ci et en ce que, dans l'entité émettrice, on compare ledit certificat avec une valeur attendue.

13. Procédé d'authentification selon la revendication 12, appliqué à une carte bancaire, caractérisé en ce que l'information A est constituée par une donnée mémorisée dans ladite carte à une adresse prédéterminée et identifiant son émetteur.

14. Procédé selon la revendication 2 ou 3, caractérisé en ce que l'algorithme E(x,y) est réversible.

15. Procédé de génération sous forme cryptée d'une pluralité de clés filles diversifiées (Kd) pour une pluralité de cartes à microprocesseur filles à partir d'une clé racine (Kr) contenue dans une carte à microprocesseur racine, caractérisé par la mise en oeuvre des étapes suivantes pour chaque carte fille :

- on exécute dans la carte racine le procédé de cryptage de la revendication 14 en deux sous étapes successives:

  - mise en oeuvre de la formule

$$Kd = E(N,Kr) \oplus f(Ag)$$

  où

    Kr est la clé racine,
    N est une donnée contenue dans la carte fille et particulière à la carte fille considérée, transmise à la carte racine,
    Ag est une donnée contenue dans la carte racine et propre au type de clé fille à engendrer,
    E(x,y) et f(...) ont la même signification que dans la revendication 1,
    Kd est la clé fille,

  - mise en oeuvre de la formule

$$CKd = E(Kd,Kc)$$

  où

    Kc est une clé de transport commune, contenue dans la carte racine et dans chacune des cartes filles de ladite carte racine,
    CKd est un cryptage de ladite clé fille,

- on transmet à la carte fille à partir de la carte racine ledit cryptage CKd de la clé fille,
- on met en oeuvre dans la carte fille la formule de décryptage suivante :

$$Kd = D(CKd, Kc)$$

  où D(x,y) est l'algorithme réciproque de E(x,y), opérant dans le même domaine, pour ainsi reconstituer dans ladite carte fille la clé Kd, et
- on écrit la clé fille Kd dans la carte fille.

16. Procédé d'authentification, par une carte fille, de la présentation d'une clé diversifiée (Kd) par une carte racine à ladite carte fille, caractérisé par les étapes suivantes :

- on met en oeuvre dans la carte racine la formule suivante :

$$Kd = E(N,Kr) \oplus f(Ag)$$

  où

    Kr est une clé racine,
    N est une donnée contenue dans la carte fille et particulière à la carte fille considérée, transmise à la carte racine,
    Ag est une donnée contenue dans la carte racine et propre au type de clé fille à engendrer,
    E(x,y) et f(...) ont la même signification que dans la revendication 1,
    Kd est la clé fille,

- on met en oeuvre dans la carte racine le procédé selon la revendication 14 sous la forme suivante :

$$MS = E((E(Rand,Kd) \oplus f(Av)),Kc)$$

où

Kc est une clé de transport commune, contenue dans la carte racine et dans chacune des cartes filles de ladite carte racine,
Av est une donnée propre à la carte fille considérée, contenue dans celle-ci et transmise à la carte racine,
Rand est un aléa fourni à la carte racine par la carte fille considérée,
MS est un message cryptant ladite clé fille Kd,

- on transmet à la carte fille à partir de la carte racine ledit message MS,
- on met en oeuvre dans la carte fille la formule de décryptage suivante:

$$Rand' = D((D(MS,Kc) \oplus f(Av)),Kd)$$

où
D(x,y) est l'algorithme réciproque de E(x,y), opérant dans le même domaine, et
- on vérifie dans la carte fille l'identité de la donnée Rand engendrée et de la donnée Rand' calculée.

**17.** Procédé d'authentification sécurisée d'une carte fille par une carte racine, caractérisé par les étapes suivantes :

- on met en oeuvre dans la carte racine la formule suivante :

$$Kdr = E(N,Kr) \oplus f(Ag)$$

où

Kr est une clé racine,
N est une donnée contenue dans la carte fille et particulière à la carte fille considérée, transmise à la carte racine,
Ag est une donnée contenue dans la carte racine et propre au type de clé fille à engendrer,
E(x,y) et f(...) ont la même signification que dans la revendication 1,
Kdr est la reconstitution d'une clé fille attendue,

- on met en oeuvre dans la carte fille le procédé selon la revendication 14 sous la forme suivante :

$$MS = D((D(Rand,Kdf) \oplus f(Av)),Kc)$$

où

D(x,y) est l'algorithme réciproque de E(x,y), opérant dans le même domaine, Kc est une clé de transport commune, contenue dans la carte racine et dans chacune des cartes filles de ladite carte racine,
Av est une donnée propre à la carte fille considérée, contenue dans celle-ci et transmise à la carte racine,
Rand est un aléa fourni par la carte racine à la carte fille considérée,
Kdf est une clé fille lue dans la carte fille,
MS est un message crypté,

- on transmet à la carte racine à partir de la carte fille ledit message MS,
- on met en oeuvre dans la carte racine la formule de décryptage suivante:

$$Rand' = E((E(MS,Kc) \oplus f(Av))Kdr)$$

et

- on vérifie dans la carte racine l'identité de la donnée Rand engendrée et de la donnée Rand' calculée, et donc l'identité de la clé fille Kdf avec la clé fille attendue Kdr.

18. Carte à microprocesseur, caractérisée en ce qu'elle contient dans une mémoire à lecture seule un moyen de cryptage pour la mise en oeuvre du procédé de cryptage utilisé dans l'une des revendications précédentes.

**Patentansprüche**

1. Verfahren zur Erzeugung einer chiffrierten Information (R) in einer Chipkarte, wobei die Karte in einem permanenten Datenspeicher einen Satz auswählbarer Chiffrierschlüssel (CS0, ..., CSn) enthält, dadurch charakterisiert, daß man die folgende Verschlüsselungsformel F anwendet:

$$(K1,K2,A,M) \rightarrow F(K1,K2,A,M) = R = E((E(M,K1)\&f(A)),K2)$$

wobei:

$E(x,y)$ einen in einem permanenten Speicher der Chipkarte gespeicherten kryptographischen Algorithmus bezeichnet, der auf Größen x und y angewendet wird, die zur spezifischen durch $\{0,1\}^a$ bezeichneten Domäne des Algorithmus gehören,
M eine zu chiffrierende Eingangsinformation bezeichnet, die zur Domäne $\{0,1\}^a$ gehört und an die Chipkarte angelegt wird,
K1 und K2 zwei Chiffrierschlüssel bezeichnen, jeweils primär bzw. sekundär, die gleich oder verschieden sein können und durch Anlegen von externen Schlüsselauswahlinformationen an die Karte aus dem Satz der Schlüssel (CS0, ..., CSn) im permanenten Datenspeicher ausgewählt werden, wobei die ausgewählten Schlüssel zur Domäne $\{0,1\}^a$ gehören,
A eine für die Beschaffenheit oder für die Herkunft der zu bewirkenden Chiffrierung repräsentative Information ist, die direkt an die Chipkarte angelegt wird oder in der Karte durch eine Eingangsadresse (AC) lokalisiert ist,
$f(A)$ eine Transformationsfunktion für die Information A bezeichnet, wobei $f(A)$ zu $\{0,1\}^a$ gehört, und
& eine Boole-Funktion bezeichnet.

2. Verfahren nach Anspruch 1, dadurch charakterisiert, daß die Boole-Funktion die Funktion "EXKLUSIVES ODER" ($\oplus$) ist.

3. Verfahren nach Anspruch 2, dadurch charakterisiert, daß die zu chiffrierende Information M dargestellt wird durch die Verkettung einer gegebenen Größe (NISO) und der Adresse AC und daß die Funktion f(A) die bei der Adresse AC enthaltende Information bezeichnet, die gegebenenfalls mit mindestens einem vorherbestimmten Bit vervollständigt wurde, um mit der Domäne $\{0,1\}^a$ übereinzustimmen.

4. Verfahren zur Erzeugung einer Vielzahl von diversifizierten Schlüsseln in nicht chiffrierter Form ausgehend von einer unveränderlichen geheimen Information und einer Vielzahl von Diversifikatoren, die jeweils die Erzeugung eines entsprechenden diversifizierten Schlüssels ermöglichen, dadurch charakterisiert, daß man wiederholt das Verfahren der Ansprüche 1, 2 oder 3 durchführt, wobei die ausgewählten Schlüssel K1 und K2 die geheime Information darstellen und die Eingangsinformation M den Diversifikator darstellt.

5. Verfahren nach Anspruch 4, dadurch charakterisiert, daß die Information A darüberhinaus in die Chiffrierung für einen Ausgeber der diversifizierten Schlüssel als charakteristische Information eingreift.

6. Verfahren nach Anspruch 4 oder 5 zur Erzeugung einer Vielzahl von Tochterschlüsseln für eine Vielzahl von Tochterchipkarten, ausgehend von einem in der eine Stammkarte darstellenden Chipkarte enthaltenen Stammschlüssel, dadurch charakterisiert, daß M von einer in jeder Tochterkarte enthaltenen fest vorgegebenen Information dargestellt wird, die für diese spezifisch ist und die an die Stammkarte angelegt wird, und daß nach jeder Verschlüsselungsstufe das Ergebnis R der Verschlüsselung in jede Tochterkarte eingeschrieben wird.

7. Verfahren nach Anspruch 6, dadurch charakterisiert, daß M jedesmal von einer normalisierten Identifikationszahl (NISO) der jeweiligen Tochterkarte gebildet wird.

EP 0 618 553 B1

8. Verfahren nach Anspruch 7 zur Erzeugung einer Vielzahl von diversifizierten Schlüsseln in jeder Tochterkarte zur Interbanken-Verwendung, dadurch charakterisiert, daß die Stammkarte in ihrem Chiffrierschlüsselsatz mindestens einen obligatorischen Stammschlüssel (CR0) sowie mindestens drei Wörter von an vorherbestimmten Adressen (ACR0, ACB, ACO) vorhandenen Größen enthält, und daß man bei jeder Tochterkarte:

- in der Stammkarte die folgenden Chiffrierungsschritte durchführt:

$$CT0 = E((E(NISO+ACR0,CR0)\oplus[ACR0])CR0)$$

$$CB = E((E(NISO+ACB,CR0)\oplus[ACB])CR0)$$

$$CO = E((E(NISO+ACO,CR0)\oplus[ACO]),CR0)$$

wobei:

CR0 den obligatorischen Stammschlüssel der Stammkarte darstellt, das Zeichen + die binäre Verknüpfung bezeichnet,
NISO die normalisierte Identifikationszahl der betreffenden Tochterkarte bezeichnet,
[AC...] eine gegebene Größe bezeichnet, die erhalten wird durch Vervollständigung des Inhalts der Adresse AC... mit einer Vielzahl von vorherbestimmten Bits,
CT0 einen obligatorischen Inter-Bank-Schlüssel bezeichnet,
CB einen obligatorischen Bankschlüssel bezeichnet,
CO einen obligatorischen Öffnungsschlüssel bezeichnet, und

- ausgehend von der Stammkarte die Schlüssel CT0, CB und CO in die Tochterkarte einschreibt.

9. Verfahren nach Anspruch 8, dadurch charakterisiert, daß die Stammkarte in ihrem Schlüsselsatz auch mindestens einen fakultativen Schlüssel (CRx) und mindestens ein zugeordnetes Wort einer Größe enthält, das sich an einer vorherbestimmten Adresse (ACRx) im Speicher der Stammkarte befindet, und weiterhin dadurch charakterisiert, daß man zur Erzeugung mindestens eines fakultativen Schlüssels (CTx) in jeder Tochterkarte: in der Stammkarte die Verschlüsselungsformel anwendet:

$$CTx = E((E(NISO+ACRx,CRx)\oplus[ACRx],CRx)$$

wobei

CRx einen fakultativen Stammschlüssel bezeichnet, das Zeichen + die binäre Verkettung bezeichnet,
NISO die normalisierte Identifikationszahl der betreffenden Tochterkarte bezeichnet,
[ACRx] eine durch Vervollständigung des Inhalts der Adresse ACRx mit einer Vielzahl von vorherbestimmten Bits erhaltene Größe bezeichnet, und

- die Schlüssel CTx ausgehend von der Stammkarte in die Tochterkarte einschreibt.

10. Rechenverfahren für ein Zeugnis in einer Chipkarte, dadurch charakterisiert, daß man das Verfahren aus Anspruch 1 oder 2 durchführt, wobei

K1 und K2 Schlüssel bedeuten, die die Charakterisierung der Chipkarte ermöglichen,
A ausgehend von einer vorherbestimmten an die Karte angelegten Adresse in den Speicher der Chipkarte gelesen wird, und
M einen Zufallsfaktor bestimmt,

wobei das Ergebnis R der Chiffrierung das Zeugnis darstellt.

11. Verfahren nach Anspruch 10, welches auf eine Chip-Bankkarte zur Erstellung eines mit einer Transaktion verbundenen Zeugnisses angewendet wird, dadurch charakterisiert, daß A eine Transaktionsgröße darstellt, die in der Bankkarte gespeichert ist, und M eine Information ist, die ausgewählt wird aus der Gruppe, welche das Datum, die Stunde und die Identifikationsinformationen des Geschäftspartners und/oder seines Zahlungsterminals umfaßt.

12. Verfahren zur Authentifizierung einer Chipkarte durch eine Ausgabeeinheit für die Karte, dadurch charakterisiert, daß man das Verfahren zur Berechnung eines Zeugnisses (R) nach Anspruch 10 in der Karte durchführt mit einem Zufallsfaktor M, der aus der Ausgabeeinheit stammt und dieser bekannt ist, und daß man das Zeugnis in der Ausgabeeinheit mit einem erwarteten Wert vergleicht.

13. Auf eine Bankkarte angewendetes Authentifizierungsverfahren nach Anspruch 12, dadurch charakterisiert, daß die Information A durch eine in der Karte an einer vorherbestimmten Adresse gespeicherte gegebene Größe dargestellt wird, die ihren Ausgeber identifiziert.

14. Verfahren nach Anspruch 2 oder 3, dadurch charakterisiert, daß der Algorithmus E(x,y) reversibel ist.

15. Verfahren zur Erstellung einer Vielzahl von diversifizierten Tochterschlüsseln (Kd) in chiffrierter Form für eine Vielzahl von Tochter-Chipkarten ausgehend von einem Stammschlüssel (Kr), der in einer Stamm-Chipkarte enthalten ist, dadurch charakterisiert, daß die folgenden Schritte für jede Tochterkarte durchgeführt werden:

- man führt in der Stammkarte das Chiffrierungsverfahren von Anspruch 14 in zwei Teilen in aufeinanderfolgenden Unterschritten durch:

- Anwendung der Formel

$$Kd = E(N,Kr) \oplus f(Ag)$$

wobei

Kr der Stammschlüssel ist,
N eine gegebene Größe ist, die in der Tochterkarte enthalten ist und für die betrachtete Tochterkarte spezifisch ist und auf die Stammkarte übertragen wird,
Ag eine in der Stammkarte enthaltene gegebene Größe ist, die spezifisch ist für den Tochterschlüsseltyp, der erzeugt werden soll,
E(x,y) und f(...) dieselbe Bedeutung haben wie in Anspruch 1,
Kd der Tochterschlüssel ist,

- Anwendung der Formel

$$CKd = E(Kd,Kc)$$

wobei

Kc ein gemeinsamer Transportschlüssel ist, der in der Stammkarte und in jeder Tochterkarte der Stammkarte enthalten ist,
CKd eine Chiffrierung des Tochterschlüssels ist,

- man überträgt ausgehend von der Stammkarte die Chiffrierung CKd des Tochterschlüssels auf die Tochterkarte,

- man wendet in der Tochterkarte die folgende Dechiffrierungsformel an:

$$Kd = D(CDk, Kc)$$

wobei D(x,y) der reziproke Algorithmus von E(x,y) ist, der in derselben Domäne arbeitet, um so in der Tochterkarte den Schlüssel Kd wiederherzustellen und

- man schreibt den Tochterschlüssel Kd in die Tochterkarte ein.

16. Authentifizierungsverfahren durch eine Tochterkarte des Angebots eines diversifizierten Schlüssels (Kd) durch eine Stammkarte an die Tochterkarte, charakterisiert durch die folgenden Schritte:

- man wendet in der Stammkarte die folgende Formel an:

$$Kd = E(N,Kr) \oplus f(Ag)$$

wobei

Kr ein Stammschlüssel ist,
N eine gegebene Größe ist, die in der Tochterkarte enthalten ist und für die betrachtete Tochterkarte spezifisch ist und auf die Stammkarte übertragen wird,
Ag eine in der Stammkarte enthaltene gegebene Größe ist, die spezifisch ist für den Tochterschlüsseltyp, der erzeugt werden soll,
E(x,y) und f(...) dieselbe Bedeutung haben wie in Anspruch 1,
Kd der Tochterschlüssel ist,

- man wendet in der Stammkarte das Verfahren nach Anspruch 14 in der folgenden Form an:

$$MS = E((E(Rand,Kd) \oplus f(Av)),Kc)$$

wobei

Kc ein gemeinsamer Transportschlüssel ist, der in der Stammkarte und in jeder der Tochterkarten der Stammkarte enthalten ist,
Av eine gegebene Größe ist, die für die betrachtete Tochterkarte spezifisch ist, in dieser enthalten ist und auf die Stammkarte übertragen wird,
Rand ein Zufallsfaktor ist, der der Stammkarte durch die betrachtete Tochterkarte geliefert wird,
MS eine Nachricht ist, die den Tochterschlüssel Kd chiffriert,

- man überträgt die Nachricht MS von der Stammkarte auf die Tochterkarte,

- man wendet in der Tochterkarte die folgende Dechiffrierungsformel an:

$$Rand' = D((D(MS,Kc) \oplus f(Av)),Kd)$$

wobei D(x,y) der reziproke Algorithmus von E(x,y) ist, der in derselben Domäne arbeitet, und

- man verifiziert in der Tochterkarte die Identität der erzeugten gegebenen Größe Rand und der berechneten Größe Rand'.

17. Gesichertes Authentifizierungsverfahren für eine Tochterkarte durch eine Stammkarte, charakterisiert durch die folgenden Schritte:

- man wendet in der Stammkarte die folgende Formel an:

$$Kdr = E(N,Kr) \oplus f(Ag)$$

wobei

Kr ein Stammschlüssel ist,
N eine gegebene Größe ist, die in der Tochterkarte enthalten ist und für die betrachtete Tochterkarte spezifisch ist und auf die Stammkarte übertragen wird,

Ag eine in der Stammkarte enthaltene gegebene Größe ist, die spezifisch ist für den Tochterschlüsseltyp, der erzeugt werden soll,

E(x,y) und f(...) dieselbe Bedeutung haben wie in Anspruch 1,

Kdr die Wiederherstellung eines erwarteten Tochterschlüssels ist,

- man wendet in der Tochterkarte das Verfahren nach Anspruch 14 in der folgenden Form an:

$$MS = D((D(Rand,Kd)\oplus f(Av)),Kc)$$

wobei

D(x,y) der reziproke Algorithmus von E(x,y) ist, der in derselben Domäne arbeitet,

Kc ein gemeinsamer Transportschlüssel ist, der in der Stammkarte und in jeder Tochterkarte der Stammkarte enthalten ist,

Av eine Größe ist, die spezifisch ist für die betrachtete Tochterkarte, in dieser enthalten ist und auf die Stammkarte übertragen wird,

Rand ein Zufallsfaktor ist, der von der Stammkarte auf die betrachtete Tochterkarte übertragen wird,

Kdf ein Tochterschlüssel ist, der in die Tochterkarte gelesen wird,

MS eine verschlüsselte Nachricht ist,

- man überträgt die Nachricht MS von der Tochterkarte auf die Stammkarte,

- man wendet in der Stammkarte die folgende Dechiffrierungsformel an:

$$Rand' = E((E(MS,Kc)\oplus f(Av))Kdr)$$

und

- man verifiziert in der Stammkarte die Identität der erzeugten Größe Rand und der berechneten Größe Rand', und somit die Identität des Tochterschlüssels Kdf mit dem erwarteten Tochterschlüssel Kdr.

18. Chipkarte, dadurch charakterisiert, daß sie in einem Lesespeicher ein Chiffrierungsmittel zur Durchführung des Chiffrierungsverfahrens enthält, das in einem der vorstehenden Ansprüche verwendet wird.


## Claims

1. A method of generating encrypted information (R) in a microprocessor card, said card having a non-volatile data memory containing a set of selectable encryption keys (CS0, ..., CSn), the method being characterized in that the following encrypting formula F is applied:

$$(K1,K2,A,M) \rightarrow F(K1,K2,A,M) = R = E((E(M,K1)\&f(A)),K2)$$

where:

E(x,y) designates a cryptographic algorithm stored in a non-volatile memory of the microprocessor card, applied to data $\underline{x}$ and $\underline{y}$ belonging to the specific domain of said algorithm, and designated by $\{0,1\}^a$;

M designates input information to be encrypted, belonging to the domain $\{0,1\}^a$, applied to the microprocessor card;

K1 and K2 designate two encryption keys, respectively a primary key and a secondary key, which may be different or identical, and which are selected from said set of keys (CS0, ..., CSn) in said non-volatile data memory by application of external key selection information to the card, said selected keys belonging to the domain $\{0,1\}^a$;

A designates information representative of the nature or the origin of the encryption to be performed, applied directly to the microprocessor card or localized in said card by an input address (AC);

f(A) designates a function for transforming the information A such that f(A) belongs to $\{0,1\}^a$; and

& designates a Boolean function.

2. A method according to claim 1, characterized in that said Boolean function is the "exclusive or" function ($\oplus$).

3. A method according to claim 2, characterized in that the information M to be encrypted is constituted by concatenating a data item (NISO) and said address AC, and in that the function f(A) designates the information A contained at address AC optionally padded out by at least one predetermined bit to agree with the domain $\{0,1\}^a$.

4. A method of generating in the clear a plurality of keys diversified from an invariable secret item of information and a plurality of diversifiers, each making it possible to generate a respective diversified key, characterized in that the method of claim 1, 2, or 3 is performed in repeated manner, in which the selected keys K1 and K2 constitute said secret information and the input information M constitutes said diversifier.

5. A method according to claim 4, characterized in that the information A is also involved in the encrypting as information characteristic of an issuer of said diversified keys.

6. A method according to claim 4 or 5, for generating a plurality of daughter keys for a plurality of daughter microprocessor cards from a root key contained in the microprocessor card, constituting a root card, characterized in that M is constituted by fixed information contained in each daughter card and specific thereto which is applied to said root card, and in that following each stage of encryption, the result R of the encryption is written in each daughter card.

7. A method according to claim 6, characterized in that M is constituted on each occasion by a standardized identification number (NISO) of the respective daughter card.

8. A method according to claim 7, for generating a plurality of diversified keys in each daughter card, for interbank use, characterized in that the root card contains in its set of encryption keys, at least one obligatory root key (CR0), together with at least three data words situated at predetermined addresses (ACR0, ACB, ACO), and in that, for each daughter card:

- the following encryption steps are performed in the root card:

$$CT0 = E((E(NISO+ACR0,CR0) \oplus [ACR0]),CR0)$$

$$CB = E((E(NISO+ACB,CR0) \oplus [ACB]),CR0)$$

$$CO = E((E(NISO+ACO,CR0) \oplus [ACO]),CR0)$$

where:

CRO designates the obligatory root key of the root card;

the + symbol designates binary concatenation;

NISO designates the standardized identification number of the daughter card in question;

[AC...] designates a data item obtained by padding out the contents of the address AC... with a plurality of predetermined bits;

CT0 designates an obligatory interbank key;

CB designates an obligatory bank key;

CO designates an obligatory opening key; and

- said keys CT0, CB, and CO are written in said daughter card from said root card.

9. A method according to claim 8, characterized in that said root card also contains in its set of keys at least one optional key (CRx) and at least one associated data word situated at a predetermined address (ACRx) in the memory of said root card, further characterized in that, to generate in each daughter card at least one optional key (CTx):

- the following encryption formula is applied in the root card:

$$CTx = E((E(NISO+ACRx,CRx)\oplus[ACRx],CRx)$$

where:

CRx designates an optional root key;
the + symbol designates binary concatenation;
NISO designates the standardized identification number of the daughter card in question;
[ACRx] designates a data obtained by padding out the contents of the address ACRx with a plurality of predetermined bits; and

- said keys CTx are written in said daughter card from said root card.

10. A method of computing a certificate in a microprocessor card, characterized in that the method of claim 1 or 2 is implemented, in which:

K1 and K2 constitute keys enabling the microprocessor card to be characterized;
A is read from the memory of the microprocessor card from a predetermined address applied to said card; and
M constitutes a random;

the result R of encryption constituting said certificate.

11. A method according to claim 10, applied to a microprocessor bank card for establishing a certificate associated with a transaction, characterized in that A constitutes an item of transaction data stored in said bank card and M is an item of information selected from the group comprising the date, the time, and identity information concerning the trader and/or the trader's payment terminal.

12. A method of authenticating a microprocessor card by means of a body issuing said card, characterized in that the method of computing a certificate (R) of claim 10 is implemented in said card, with a random M coming from said issuing body and known thereto, and in that in the issuing body, said certificate is compared with an expected value.

13. An authentication method according to claim 12, applied to a bank card, characterized in that the information A is constituted by a data item stored in said card at a predetermined address and identifying the body issuing it.

14. A method according to claim 2 or 3, characterized in that the algorithm $E(x,y)$ is reversible.

15. A method of generating a plurality of diversified daughter keys (Kd) in encrypted form for a plurality of daughter microprocessor cards from a root key (Kr) contained in a root microprocessor card, characterized by implementing the following steps for each daughter card:

- the encryption method of claim 14 is executed in the root card in two successive stages:

- implementing the formula:

$$Kd = E(N,Kr)\oplus f(Ag)$$

where:

Kr is the root key;
N is a data item contained in the daughter card and specific to the daughter card in question, as transmitted to the root card;
Ag is a data item contained in the root card and specific to the type of daughter key to be generated;

E(x,y) and f(...) have the same meaning as in claim 1;
Kd is the daughter key;

- implementing the formula:

$$Ckd = E(Kd,Kc)$$

where:

Kc is a common transport key, contained in the root card and in each of the daughter cards of said root card;
CKd is an encrypted version of said daughter key;

- said encrypted version CKd of the daughter key is transmitted to the daughter card from the root card;
- the following decryption formula is implemented in the daughter card:

$$Kd = D(CKd,Kc)$$

where:
D(x,y) is the reciprocal algorithm to E(x,y), operating in the same domain, thereby reconstituting the key Kd in said daughter card; and
- the daughter key Kd is written in the daughter card.

16. A method enabling a daughter card to authenticate the presentation of a diversified key (Kd) by a root card to said daughter card, characterized by the following stages:

- the following formula is implemented in said root card:

$$Kd = E(N,Kr)\oplus f(Ag)$$

where:

Kr is a root key;
N is a data item contained in the daughter card and specific to the daughter card in question, which is transmitted to the root card;
Ag is a data item contained in the root card and specific to the type of daughter key to be generated;
E(x,y) and f(...) have the same meaning as in claim 1; and
Kd is the daughter key;

- the method according to claim 14 is implemented in the root card in the following form:

$$MS = E((E(Rand,Kd)\oplus f(Av)),Kc)$$

where:

Kc is a common transport key, contained in the root card and in each of the daughter cards of said root card;
Av is a data item specific to the daughter card under consideration, contained therein and transmitted to the root card;
Rand is a random supplied to the root card by the daughter card in question; and
MS is a message encrypting said daughter key Kd;

- said message MS is transmitted to the daughter card from the root card;
- the following decryption formula is implemented in the daughter card:

$$Rand' = D((D(MS,Kc) \oplus f(Av)),Kd)$$

where:

D(x,y) is the algorithm reciprocal to E(x,y), operating in the same domain; and

- it is checked in the daughter card that the generated data item Rand and the computed data item Rand' are identical.

17. A secure method of authenticating a daughter card by a root card, characterized by the following stages:

- the following formula is implemented in the root card:

$$Kdr = E(N,Kr) \oplus f(Ag)$$

where:

Kr is a root key;
N is a data item contained in the daughter card, specific to the daughter card in question, and transmitted to the root card;
Ag is a data item contained in the root card and specific to the type of daughter key to be generated;
E(x,y) and f(...) have the same meaning as in claim 1; and
Kdr is the reconstitution of an expected daughter key;

- the method according to claim 14 is implemented in the daughter card in the following form:

$$MS = D((D(Rand,Kdf) \oplus f(Av)),Kc)$$

where:

D(x,y) is the algorithm reciprocal to E(x,y) operating in the same domain, Kc is a common transport key contained in the root card and in each of the daughter cards of said root card;
Av is a data item specific to the daughter card under consideration, contained therein, and transmitted to the root card;
Rand is a random supplied by the root card to the daughter card in question;
Kdf is a daughter key read in the daughter card; and
MS is an encrypted message;

- said message MS is transmitted to the root card from the daughter card;
- the following decryption formula is implemented in the root card:

$$Rand' = E((E(MS,Kc) \oplus f(Av))Kdr)$$

and

- the root card checks that the generated data item Rand is identical with the computed data item Rand', and thus that the daughter key Kdf is identical with the expected daughter key Kdr.

18. A microprocessor card, characterized in that it contains encryption means in a read only memory for implementing the encryption method used in any preceding claim.

M
↓
K1 → [ E ]

f(A) → ⊕
↓
K2 → [ E ]
↓
R

FIG.1

M
↓
K → [ E ]
↓
[A] → ⊕
↓
K → [ E ]
↓
R

FIG.2

M
↓
K1 → [ D ]
↓
f(A) → ⊕
↓
K2 → [ D ]
↓
S

FIG.3